# EUROPÄISCHE PATENTSCHRIFT

(11) **EP 3 934 964 B1**
(45) Veröffentlichungstag und Bekanntmachung des Hinweises auf die Patenterteilung: **21.09.2022**
(21) Anmeldenummer: 20708475.7
(22) Anmeldetag: 02.03.2020
(51) Int. Cl.: B62D 5/00, B62D 6/00

(54) **VERFAHREN ZUR STEUERUNG EINES STEER-BY-WIRE-LENKSYSTEMS UND STEER-BY-WIRE-LENKSYSTEM FÜR EIN KRAFTFAHRZEUG**
METHOD FOR CONTROLLING A STEER-BY-WIRE STEERING SYSTEM AND STEER-BY-WIRE STEERING SYSTEM FOR A MOTOR VEHICLE
PROCÉDÉ DE COMMANDE D'UN SYSTÈME DE DIRECTION À COMMANDE PAR CÂBLE ET SYSTÈME DE DIRECTION À COMMANDE PAR CÂBLE POUR UN VÉHICULE À MOTEUR

(30) Priorität: 06.03.2019 DE 102019203040
(43) Veröffentlichungstag der Anmeldung: 12.01.2022
(73) Patentinhaber: thyssenkrupp AG, 45143 Essen (DE); thyssenkrupp Presta AG, 9492 Eschen (LI)
(72) Erfinder: KAKAS, Peter, 1118 Budapest (HU); VARGA, Àdám, 1118 Budapest (HU); VIZER, Daniel, 2064 Csabdi (HU)
(74) Vertreter: thyssenkrupp Intellectual Property GmbH
(86) Internationale Anmeldenummer: PCT/EP2020/055448
(87) Internationale Veröffentlichungsnummer: WO 2020/178242

(56) Entgegenhaltungen:
- US-B2- 9 598 102

## Beschreibung

### Beschreibung

Die Erfindung betrifft ein Verfahren zur Steuerung eines Steer-by-Wire-Lenksystems nach dem Oberbegriff des Anspruchs 1 und ein Steer-by-Wire-Lenksystem für ein Kraftfahrzeug nach dem Oberbegriff des Anspruchs 9.

In Steer-by-Wire-Lenksystemen für Kraftfahrzeuge besteht keine mechanische Verbindung mehr zwischen einem vom Fahrer bedienten Lenkrad und den gelenkten Rädern. Stattdessen wird die Stellung der gelenkten Räder durch einen elektronisch geregelten Lenksteller eingestellt, um das Fahrzeug auf der gewünschten Bahn zu führen. Zu diesem Zweck stellt ein mit der Lenksäule verbundener Feedback-Aktuator ein Sollstellungssignal bereit, das die Lenkabsicht des Fahrers repräsentiert. Der Lenksteller wird dann über einen Stellungsregler mit ausreichender Leistung und Bandbreite derart mit einem Drehmoment-Anforderungssignal angesteuert, dass die gelenkten Räder in die Sollstellung eingeregelt werden.

Diese sicherheitskritische Regelungsaufgabe muss eine hohe Ausfallsicherheit gewährleisten, damit das Fahrzeug trotz der fehlenden mechanischen Verbindung auch im Falle eines fehlerhaften Stellungsreglers lenkbar bleibt und der Fahrer die Kontrolle über das Fahrzeug behält. Aus diesem Grunde ist es wichtig Sicherheitskonzepte für den Regelkreis des Lenkstellers zu entwickeln.

Aus US 9 598 102 B2 . welche die Merkmale der Oberbegriffe der unabhängigen Ansprüche zeigt, ist ein Verfahren zur Abschwächung von Unregelmäßigkeiten in einem ersten Steuerungsbefehl zum Steuern eines Servolenkungssystems eines Fahrzeugs bekannt. Das Verfahren erzeugt ein Bereichssignal, das einen Bereich von Befehlswerten auf Grundlage einer Vielzahl von Eingabesignalen kennzeichnet, und ermittelt, ob der erste Steuerungsbefehl länger als eine vorbestimmte Zeitspanne außerhalb des Bereichs liegt. Wenn der erste Steuerungsbefehl ein durch das Servolenkungssystem bereitzustellendes Unterstützungsdrehmoment betrifft, kann der Bereich auf Grundlage der Fahrzeuggeschwindigkeit und eines Steuerrad-Lenkmoments bestimmt werden. Das Verfahren begrenzt den ersten Steuerungsbefehl auf den Bereich und sendet den begrenzten ersten Steuerungsbefehl an das Servolenkungssystem in Reaktion darauf, dass der erste Steuerungsbefehl für weniger oder gleich der vorbestimmten Zeitspanne außerhalb des Bereichs liegt. Ein zweiter Steuerungsbefehl wird auf Grundlage einer Teilmenge der Vielzahl von Eingabesignalen erzeugt und an das Servolenkungssystem in Reaktion darauf gesandt, dass festgestellt wird, dass der erste Steuerungsbefehl für mehr als die vorbestimmte Zeitspanne außerhalb des Bereichs liegt. Nachteilig ist, dass das vorbekannte Verfahren die Fahrsituation, in der sich das Kraftfahrzeug befindet, nur unzureichend berücksichtigt, so dass das erzeugte Bereichssignal für eine Vielzahl von unterschiedlichen Fahrsituationen, wie beispielsweise Kurvenfahrt und Geradeausfahrt, gleichermaßen anwendbar sein muss. Dieser allgemein gültige Bereich muss entsprechend groß gewählt sein, wodurch fehlerhafte Steuerungsbefehle erst spät aufgrund von großen Unregelmäßigkeiten erkannt werden können.

Aufgabe der Erfindung ist es daher, ein Verfahren zur Steuerung eines Steer-by-Wire-Lenksystems und ein Steer-by-Wire-Lenksystem für ein Kraftfahrzeug anzugeben, durch das die Sicherheit und Zuverlässigkeit der Lenkung verbessert wird.

Diese Aufgabe wird gelöst durch ein Verfahren zur Steuerung eines Steer-by-Wire-Lenksystems mit den Merkmalen des Anspruchs 1, sowie durch ein Steer-by-Wire-Lenksystem für ein Kraftfahrzeug mit den Merkmalen des Anspruchs 9.

Hierdurch wird eine Steuerung eines Steer-by-Wire-Lenksystems geschaffen, die eine schnellere Fehlererkennung und eine verbesserte Steuerbarkeit des Kraftfahrzeugs im Fehlerfall gewährleistet. Das erfindungsgemäße Steuerungsverfahren sieht eine Signalbegrenzungseinrichtung vor, die einen Referenzregler als Sicherheitsbaustein zusätzlich zu einem Stellungsregler enthält. Der Referenzregler ermöglicht es, sowohl den vom Lenksteller bereitgestellten Ist-Lenkwinkel als auch den vom Feedback-Aktuator bereitgestellten Soll-Lenkwinkel bei der Bestimmung des zulässigen Drehmomentbereichs zu berücksichtigen.

So können die in der jeweiligen Fahrsituation auf die gelenkten Räder wirkenden externen Kräfte, die einer Einstellung des Soll-Lenkwinkels entgegenwirken, beispielsweise durch die Regelabweichung zwischen Ist- und Soll-Lenkwinkel berücksichtigt werden, um ein sicheres Referenzdrehmoment zu bestimmen. Dieses Referenzdrehmoment ist geeignet, den Soll-Lenkwinkel des Lenkstellers mit einer tolerierbaren Regelabweichung einzuregeln. Zugleich ist das Referenzdrehmoment sicher in dem Sinne, dass es keine plötzlichen oder unvorhergesehenen Änderungen des Fahrzeugzustands verursacht und das Fahrzeug steuerbar bleibt. Ausgehend von diesem Referenzdrehmoment wird ein sicherer zulässiger Drehmomentbereich anhand von einer vorgebbaren Maximalabweichung bestimmt. Durch das erfindungsgemäße Verfahren wird der zulässige Drehmomentbereich an ein in der jeweiligen Fahrsituation zu erwartendes Drehmoment angepasst. Die bei einem ordnungsgemäß arbeitenden Stellungsregler auftretenden Abweichungen sind daher reduziert, so dass eine verringerte Maximalabweichung ausreichend ist, um fehlerhafte Signale des Stellungsreglers von ordnungsgemäßen Signalen zu unterscheiden. Ein fehlerhafter Stellungsregler kann somit schneller erkannt werden. Außerdem führt der fahrsituationsangepasste zulässige Drehmomentbereich im Fehlerfall des Stellungsreglers zu einer verbesserten Steuerbarkeit des Fahrzeugs auf Grundlage des begrenzten Drehmoment-Anforderungssignals.

Vorzugsweise wird bei der Bestimmung des Referenz-Drehmomentsignals die momentane Winkelgeschwindigkeit des Lenkstellers berücksichtigt. Dadurch kann der Referenzregler schneller auf einen sich ändernden Ist-Linkwinkel durch externe Einflüsse, wie beispielsweise durch einen Bordsteinkontakt, reagieren.

Vorzugsweise enthält das Referenz-Drehmomentsignal einen zur Regelabweichung zwischen Soll- und Ist-Lenkwinkel proportionalen Anteil und einen von der Winkelgeschwindigkeit des Lenkstellers abhängigen Anteil. Der Referenzregler kann somit als PD-Regler ausgebildet sein, der Überschwingungen der Regelung vermeidet oder zumindest reduziert. Insbesondere kann vorgesehen sein, dass der Referenzregler zur Verringerung der Regelabweichung optimiert angepasst ist.

Die zur Bestimmung des zulässigen Drehmomentbereichs verwendete Maximalabweichung kann abhängig von der Fahrgeschwindigkeit des Fahrzeugs gewählt werden. Dadurch können Lenkeingriffe durch weitere Assistenzsysteme, beispielsweise korrigierende Lenkfunktionen einer aktiven Lenkung, geschwindigkeitsangepasst toleriert werden.

Der Stellungsregler weist vorzugsweise eine höhere Bandbreite als der Referenzregler auf. Durch die höhere Bandbreite des Stellungsreglers kann die Steuerung des Steer-by-Wire-Lenksystems im Normalbetrieb auch höherfrequente Störeinflüsse ausregeln. Für den Fall dass derartige Störeinflüsse oder ein fehlerhafter Betrieb des Stellungsreglers zu einer Instabilität in der Regelstrecke durch Aufschaukeln des angeforderten Drehmoments führen, fällt die Steuerung über den Referenzregler mit niedrigerer Bandbreite auf eine robuste und sichere Regelung mit tolerierbarer Regelabweichung zurück.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch den Aufbau eines Steer-by-Wire-Lenksystems nach einem ersten Ausführungsbeispiel der Erfindung,
- Fig. 2: zeigt schematisch den Aufbau der Ansteuereinheit gemäß dem Ausführungsbeispiel nach Fig. 1,
- Fig. 3: zeigt schematisch den Aufbau der Signalbegrenzungseinrichtung gemäß dem Ausführungsbeispiel nach Fig. 1 und 2,
- Fig. 4: zeigt schematisch den Aufbau der Signalbegrenzungseinrichtung gemäß einem zweiten Ausführungsbeispiel,
- Fig. 5: zeigt beispielhaft ein Diagramm eines zulässigen Drehmomentbereichs in Abhängigkeit von einer Regelabweichung.

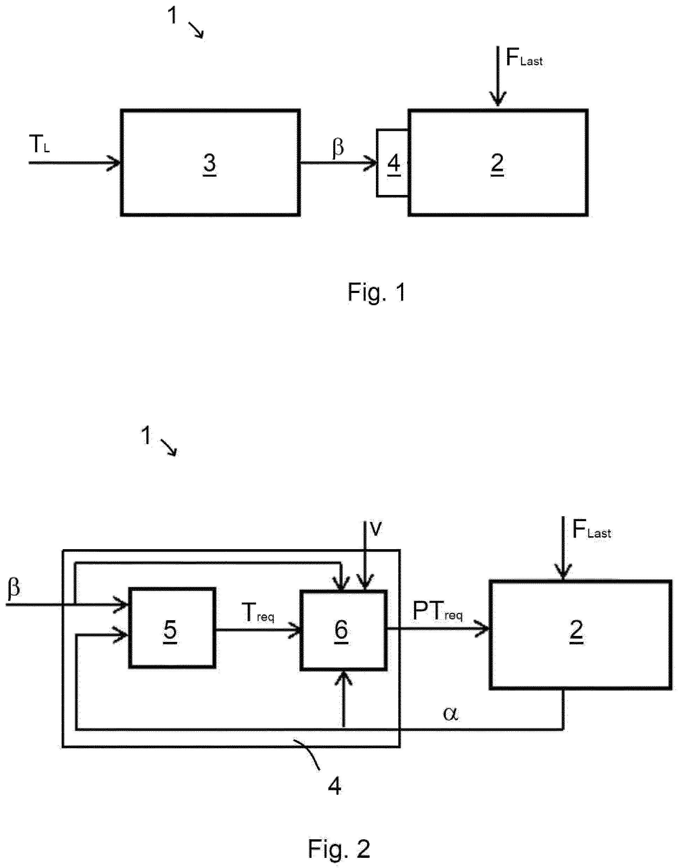

In Fig. 1 ist schematisch der Aufbau eines Steer-by-Wire-Lenksystems für ein Kraftfahrzeug gemäß einem ersten Ausführungsbeispiel der Erfindung dargestellt. Das Steer-by-Wire-Lenksystem 1 weist einen auf gelenkte Räder wirkenden, elektronisch regelbaren Lenksteller 2 auf, der einen Ist-Lenkwinkel α der gelenkten Räder erfasst (vgl. Fig. 2), und einen Feedback-Aktuator 3 auf, der einen über ein Lenkrad eingestellten Soll-Lenkwinkel β erfasst. Ferner ist eine Ansteuereinheit 4 vorgesehen, die den Lenksteller 2 in Abhängigkeit des Soll-Lenkwinkels β und des Ist-Lenkwinkels α mit einem begrenzten Drehmoment-Anforderungssignal PT_{req} ansteuert.

Der Feedback-Aktuator 3 wird vom Fahrer mittels eines auf ein Lenkrad ausgeübten Lenkmoments T_{L} als Eingangsgröße beaufschlagt. Der Feedback-Aktuator kann dazu ausgebildet sein, die durch das Lenkmoment T_{L} bewirkte Verstellung des Lenkrads mittels eines Drehwinkelsensors zu messen und dem gemessenen Winkel einen Soll-Lenkwinkel β zuordnen. Alternativ kann der Feedback-Aktuator das Lenkmoment T_{L} messen und diesem einen Soll-Lenkwinkel β zuordnen. Der Soll-Lenkwinkel β wird als Ausgangssignal des Feedback-Aktuators 3 an die Ansteuereinheit 4 übertragen. Die Ansteuereinheit 4 kann als integriertes Steuergerät Teil des Lenkstellers 2 sein oder als ein separates Steuergerät ausgebildet sein. Auf den Lenksteller 2 wirkt seitens der gelenkten Räder eine Lenklast F_{Last} ein, die einer Verstellung des Ist-Lenkwinkels α durch den Lenksteller 2 entgegenwirkt und/oder den Ist-Lenkwinkel α abhängig von der Fahrsituation mit unterschiedlichen Störungen beaufschlagt. Derartige externe Lenklasten können beispielsweise durch Rückstellkräfte in die Geradeausstellung bei Kurvenfahrt oder durch Kräfte aufgrund von Seitenwind verursacht sein.

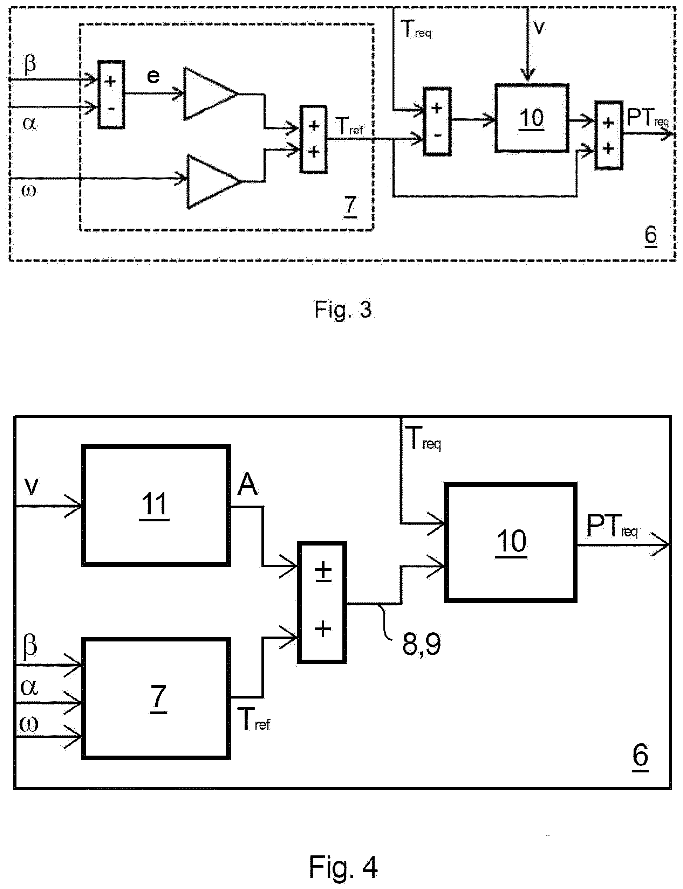

Der erfindungsgemäße Aufbau und die Funktionsweise der Ansteuereinheit 4 wird anhand des in Fig. 2 und 3 schematisch dargestellten ersten Ausführungsbeispiels näher erläutert. Die Ansteuereinheit 4 weist einen Stellungsregler 5 und eine Signalbegrenzungseinrichtung 6 auf, wobei die Signalbegrenzungseinrichtung 6 einen Referenzregler 7 enthält (vgl. Fig. 3).

Die Ansteuereinheit 4 führt zur Steuerung des Steer-by-Wire-Lenksystems 1 das folgende Verfahren aus.

Der Stellungsregler 5 der Ansteuereinheit 4 bestimmt basierend zumindest auf dem Soll-Lenkwinkel β und dem Ist-Lenkwinkel α ein Drehmoment-Anforderungssignal T_{req}. Das Drehmoment-Anforderungssignal T_{req} wird anschließend in der Signalbegrenzungseinrichtung 6 der Ansteuereinheit 4 derart begrenzt, dass das durch das begrenzte Drehmoment-Anforderungssignal PT_{req} angeforderte Drehmoment auf einen zulässigen Drehmomentbereich R begrenzt ist. Hierfür bestimmt die Signalbegrenzungseinrichtung 6 mittels eines Referenzreglers 7 basierend zumindest auf dem Soll-Lenkwinkel β und dem Ist-Lenkwinkel α ein Referenz-Drehmomentsignal T_{ref} und legt den zulässigen Drehmomentbereich R mittels einer wählbaren Maximalabweichung A von dem Referenz-Drehmomentsignal T_{ref} fest. Schließlich wird das begrenzte Drehmoment-Anforderungssignal PT_{req} an den Lenksteller 2 übermittelt.

Wie in Fig. 3 dargestellt wird vorzugsweise eine momentane Winkelgeschwindigkeit ω des Lenkstellers 2 bei der Bestimmung des Referenz-Drehmomentsignals T_{ref} berücksichtigt. Durch Berücksichtigung der Winkelgeschwindigkeit ω im Referenzregler 7 kann ein Dämpfungsterm in die Regelung aufgenommen werden, der schnellen Veränderungen des Ist-Stellwinkels α entgegenwirkt. Dadurch kann das für die Dämpfung von plötzlich auftretenden, den Ist-Stellwinkels α verändernden Störkräften erforderliche Drehmoment bei der Berechnung des Referenz-Drehmomentsignals T_{ref} berücksichtigt werden.

Vorzugsweise weist der Stellungsregler 5 eine höhere Bandbreite auf als der Referenzregler 7. Im Falle, dass die Signalbegrenzungseinrichtung 6 über den Referenzregler 7 in die Regelung eingreift, kann die niedrigere Bandbreite des Referenzreglers 7 zu einer verringerten Genauigkeit der Positionskontrolle und zu einem ungewohnten Lenkgefühl führen. Es ist jedoch sichergestellt, dass die geregelte Position innerhalb von festgelegten Sicherheitstoleranzen verbleibt. Durch die verringerte Bandbreite kann jedoch vorteilhaft auch die erforderliche Rechenkapazität reduziert werden. Die geringere Komplexität des Referenzreglers dient somit dazu, die Sicherheit des Lenksystems zu erhöhen.

Das Verhältnis der Bandbreiten von Stellungsregler 5 und Referenzregler 7 liegt vorzugsweise im Bereich von 7:6 bis 4:3. Insbesondere können die Bandbreiten der Regler 5, 7 im Bereich von 5 Hz bis 20 Hz liegen. Vorzugsweise kann der Stellungsregler 5 eine geringere Verzögerung aufweisen als der Referenzregler 7.

Wie in Fig. 3 dargestellt wird vorzugsweise im Referenzregler 7 eine Regelabweichung e als Differenz aus Soll-Lenkwinkel β und Ist-Lenkwinkel α bestimmt, die dann vorzugsweise linear verstärkt wird und zur Bestimmung des Referenz-Drehmomentsignals T_{ref} mit einem von der Winkelgeschwindigkeit ω abhängigen Signalanteil summiert wird. Das Referenz-Drehmomentsignal T_{ref} enthält somit vorzugsweise einen zur Differenz des Soll-Lenkwinkels β und des Ist-Lenkwinkels α proportionalen Anteil und einen von der Winkelgeschwindigkeit ω des Lenkstellers 2 abhängigen Anteil.

Der Referenzregler 7 kann zur Verringerung der Regelabweichung e optimiert angepasst werden. Hierzu können beispielsweise die beiden vorgenannten Signalanteile so zueinander gewichtet werden, dass die in bestimmten Fahrsituationen auftretenden Regelabweichungen e minimiert werden.

Gemäß dem in Fig. 3 dargestellten ersten Ausführungsbeispiel bestimmt die Signalbegrenzungseinrichtung 6 eine Abweichung des Drehmoment-Anforderungssignals T_{req} von dem Referenz-Drehmomentsignal T_{ref}. Anschließend wird die Abweichung - in der Begrenzereinheit 10 - auf die wählbare Maximalabweichung A begrenzt. Als begrenztes Drehmoment-Anforderungssignal PT_{req} gibt die Signalbegrenzungseinrichtung 6 schließlich die Summe aus der begrenzten Abweichung und dem Referenz-Drehmomentsignal T_{ref} aus.

Die Maximalabweichung A kann dabei abhängig von einer Fahrgeschwindigkeit v des Fahrzeugs gewählt werden. So reicht bei hohen Geschwindigkeiten bereits eine geringe Maximalabweichung A aus, um beispielsweise die Lenkeingriffe eines Seitenwindassistenten oder Spurhalteassistenten innerhalb des zulässigen Drehmomentbereichs tolerieren zu können, während zur Tolerierung eines bei niedrigen Geschwindigkeiten eingreifenden Einparkassistenten eine größere Maximalabweichung A vorteilhaft sein kann.

In Fig. 4 ist ein zweites Ausführungsbeispiel einer Signalbegrenzungseinrichtung 6 gemäß der Erfindung dargestellt, die in einem Steer-by-Wire-Lenksystem nach Fig. 1 und 2 eingesetzt werden kann. Die Signalbegrenzungseinrichtung 6 unterscheidet sich von dem in Fig. 3 dargestellten Ausführungsbeispiel durch die Art und Weise der Signalverarbeitung. Gemäß Fig. 4 ist eine Berechnungseinheit 11 vorgesehen, die abhängig von der Fahrzeuggeschwindigkeit eine Maximalabweichung A vorgibt. Die Berechnung kann beispielsweise über ein Berechnungsmodell oder auch über eine Nachschlagetabelle erfolgen.

Die Signalbegrenzungseinrichtung 6 bestimmt dann eine obere Bereichsgrenze 8 und eine untere Bereichsgrenze 9 des zulässigen Drehmomentbereichs R durch Addition der Maximalabweichung A zu bzw. Subtraktion der Maximalabweichung A von dem durch den Referenzregler 7 vorgegebenen Referenz-Drehmomentsignal T_{ref}. Die obere und die untere Bereichsgrenze 8, 9 sowie das Drehmoment-Anforderungssignal T_{req} werden einer Begrenzereinheit 10 zugeführt, die das Drehmoment-Anforderungssignal T_{req} auf die jeweilige obere 8 bzw. untere Bereichsgrenze 9 begrenzt, wenn es die obere 8 oder die untere Bereichsgrenze 9 überschreitet. Das begrenzte Signal wird als begrenztes Drehmoment-Anforderungssignal PT_{req} ausgegeben.

Im Übrigen gelten die Ausführungen zum ersten Ausführungsbeispiel für das zweite Ausführungsbeispiel entsprechend.

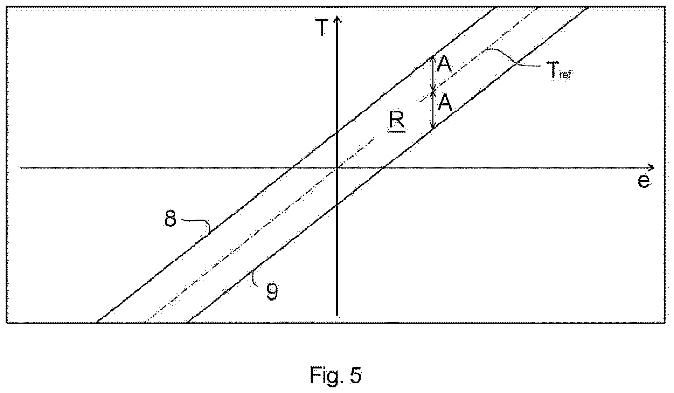

Fig. 5 zeigt beispielhaft ein Diagramm eines zulässigen Drehmomentbereichs R in Abhängigkeit von der Regelabweichung e. In dem dargestellten Beispiel ist das Referenz-Drehmomentsignal T_{ref} proportional zu der ermittelten Regelabweichung e, d.h. der Differenz von Soll-Lenkwinkel β und Ist-Lenkwinkel α. Die obere Bereichsgrenze 8 ergibt sich durch Addition der Maximalabweichung A zu dem Referenz-Drehmomentsignal T_{ref}. Entsprechend ergibt sich die untere Bereichsgrenze 9 durch Subtraktion der Maximalabweichung A von dem Referenz-Drehmomentsignal T_{ref}. Zwischen den beiden Bereichsgrenzen 8, 9 erstreckt sich der zulässige Drehmomentbereich R.

Die Maximalabweichung A kann abhängig gewählt werden von sicheren Signalen, die beispielsweise durch den Lenksteller gemessen werden und/oder durch das Fahrzeug bereitgestellt werden. Wie bereits ausgeführt, kann die Maximalabweichung A von der Fahrgeschwindigkeit v abhängen, so dass sich für unterschiedliche Fahrgeschwindigkeiten v unterschiedlich breite zulässige Bereiche R ergeben. Ferner kann die Maximalabweichung A auch von der Regelabweichung e abhängen, wodurch die Bereichsgrenzen 8, 9 nicht parallel verlaufen. Insbesondere kann die Maximalabweichung A auch zu Null gewählt werden. In diesem Fall wird der Lenksteller 2 allein auf Grundlage des Referenz-Drehmomentsignals T_{ref} angesteuert.

Schließlich kann es vorteilhaft sein, wenn die Maximalabweichung A bei anhaltender Signalbegrenzung kontinuierlich reduziert wird. Hierdurch kann erreicht werden, dass der Referenzregler 7 bei einem andauernden Fehler des Stellungsreglers 5 die Regelung schleichend übernimmt und als begrenztes Drehmoment-Anforderungssignal PT_{req} das Referenz-Drehmomentsignal T_{ref} ausgegeben wird.

### Bezugszeichenliste

- 1: Steer-by-Wire-Lenksystem
- 2: Lenksteller
- 3: Feedback-Aktuator
- 4: Ansteuereinheit
- 5: Stellungsregler
- 6: Signalbegrenzungseinrichtung
- 7: Referenzregler
- 8: obere Bereichsgrenze
- 9: untere Bereichsgrenze
- 10: Begrenzereinheit
- 11: Berechnungseinheit

- α: Ist-Lenkwinkel
- β: Soll-Lenkwinkel
- ω: Winkelgeschwindigkeit
- e: Regelabweichung
- v: Fahrgeschwindigkeit
- T_{req}: Drehmoment-Anforderungssignal
- T_{ref}: Referenz-Drehmomentsignal
- PT_{req}: begrenztes Drehmoment-Anforderungssignal
- R: zulässiger Drehmomentbereich
- A: Maximalabweichung
- T_{L}: Lenkmoment
- F_{Last}: Lenklast

## Patentansprüche

1. Verfahren zur Steuerung eines Steer-by-Wire-Lenksystems (1) für ein Kraftfahrzeug umfassend einen auf gelenkte Räder wirkenden elektronisch regelbaren Lenksteller (2), der einen Ist-Lenkwinkel (α) der gelenkten Räder erfasst, einen Feedback-Aktuator (3), der einen über ein Lenkrad eingestellten Soll-Lenkwinkel (β) erfasst, und eine Ansteuereinheit (4), die den Lenksteller (2) in Abhängigkeit des Soll-Lenkwinkels (β) und des Ist-Lenkwinkels (α) mit einem begrenzten Drehmoment-Anforderungssignal (PT_{req}) ansteuert,
wobei das Verfahren die folgenden Schritte umfasst:
- Bestimmen eines Drehmoment-Anforderungssignals (T_{req}) durch einen Stellungsregler (5) der Ansteuereinheit (4) basierend zumindest auf dem Soll-Lenkwinkel (β) und dem Ist-Lenkwinkel (α),
- Begrenzen des Drehmoment-Anforderungssignals (T_{req}) in einer Signalbegrenzungseinrichtung (6) der Ansteuereinheit (4), derart, dass das durch das begrenzte Drehmoment-Anforderungssignal (PT_{req}) angeforderte Drehmoment auf einen zulässigen Drehmomentbereich (R) begrenzt ist,
- Übermitteln des begrenzten Drehmoment-Anforderungssignals (PT_{req}) an den Lenksteller (2),
**dadurch gekennzeichnet, dass** die Signalbegrenzungseinrichtung (6) mittels eines Referenzreglers (7) basierend zumindest auf dem Soll-Lenkwinkel (β) und dem Ist-Lenkwinkel (α) ein Referenz-Drehmomentsignal (T_{ref}) bestimmt und den zulässigen Drehmomentbereich (R) mittels einer wählbaren Maximalabweichung (A) von dem Referenz-Drehmomentsignal (T_{ref}) festlegt.

2. Verfahren nach Anspruch 1, **dadurch gekennzeichnet, dass** bei der Bestimmung des Referenz-Drehmomentsignals (T_{ref}) durch den Referenzregler (7) eine momentane Winkelgeschwindigkeit (ω) des Lenkstellers (2) berücksichtigt wird.

3. Verfahren nach Anspruch 2, **dadurch gekennzeichnet, dass** das Referenz-Drehmomentsignal (T_{ref}) einen zur Differenz des Soll-Lenkwinkels (β) und des Ist-Lenkwinkels (α) proportionalen Anteil und einen von der Winkelgeschwindigkeit (ω) des Lenkstellers (2) abhängigen Anteil enthält.

4. Verfahren nach einem der Ansprüche 1 bis 3, **dadurch gekennzeichnet, dass** der Referenzregler (7) zur Verringerung einer Regelabweichung optimiert angepasst ist.

5. Verfahren nach einem der Ansprüche 1 bis 4, **dadurch gekennzeichnet, dass** die Maximalabweichung (A) abhängig von einer Fahrgeschwindigkeit (v) des Fahrzeugs gewählt wird.

6. Verfahren nach einem der Ansprüche 1 bis 5, **dadurch gekennzeichnet, dass** der Stellungsregler (5) eine höhere Bandbreite aufweist als der Referenzregler (7).

7. Verfahren nach einem der Ansprüche 1 bis 6, **dadurch gekennzeichnet, dass** die Signalbegrenzungseinrichtung (6) eine Abweichung des Drehmoment-Anforderungssignals (T_{req}) von dem Referenz-Drehmomentsignal (T_{ref}) bestimmt, die Abweichung auf die wählbare Maximalabweichung (A) begrenzt und als begrenztes Drehmoment-Anforderungssignal (PT_{req}) die Summe aus der begrenzten Abweichung und dem Referenz-Drehmomentsignal (T_{ref}) ausgibt.

8. Verfahren nach einem der Ansprüche 1 bis 6, **dadurch gekennzeichnet, dass** die Signalbegrenzungseinrichtung (6) eine obere (8) und eine untere Bereichsgrenze (9) des zulässigen Drehmomentbereichs (R) durch Addition der Maximalabweichung (A) zu bzw. Subtraktion der Maximalabweichung (A) von dem Referenz-Drehmomentsignal (T_{ref}) bestimmt und das Drehmoment-Anforderungssignal (T_{req}) bei Überschreiten der oberen (8) oder der unteren Bereichsgrenze (9) auf die jeweilige obere (8) bzw. untere Bereichsgrenze (9) begrenzt.

9. Steer-by-Wire-Lenksystem (1) für ein Kraftfahrzeug umfassend:
- einen auf gelenkte Räder wirkenden elektronisch regelbaren Lenksteller (2), über den ein Ist-Lenkwinkel (α) der gelenkten Räder erfassbar ist,
- ein Feedback-Aktuator (3), mit dem ein über ein Lenkrad einstellbarer Soll-Lenkwinkel (β) erfassbar ist, und
- eine Ansteuereinheit (4) zur Ansteuerung des Lenkstellers (2) in Abhängigkeit des Soll-Lenkwinkels (β) und des Ist-Lenkwinkels (α) mittels eines begrenzten Drehmoment-Anforderungssignals (PT_{req}),
wobei die Ansteuereinheit (4) einen Stellungsregler (5) und eine Signalbegrenzungseinrichtung (6) enthält, **dadurch gekennzeichnet, dass** die Signalbegrenzungseinrichtung (6) einen Referenzregler (7) enthält und dazu ausgebildet ist, das Verfahren nach einem der Ansprüche 1 bis 8 auszuführen.

## Claims

1. A method for controlling a steer-by-wire steering system (1) for a motor vehicle comprising an electronically controllable steering actuator (2) which acts on steered wheels and which detects an actual steering angle (α) of the steered wheels, a feedback actuator (3) which detects a desired steering angle (β) set via a steering wheel, and an activation unit (4) which activates the steering actuator (2) in accordance with the desired steering angle (β) and the actual steering angle (α) with a limited torque request signal (PT_{req}),
wherein the method comprises the following steps:
- determining a torque request signal (T_{req}) by a position controller (5) of the activation unit (4) based at least on the desired steering angle (β) and the actual steering angle (α),
- limiting the torque request signal (T_{req}) in a signal limiting device (6) of the activation unit (4) such that the torque requested by the limited torque request signal (PT_{req}) is limited to a permissible torque range (R),
- transmitting the limited torque request signal (PT_{req}) to the steering actuator (2),
**characterized in that** the signal limiting device (6) determines a reference torque signal (T_{ref}) by means of a reference controller (7) based at least on the desired steering angle (β) and the actual steering angle (α) and defines the permissible torque range (R) by means of a selectable maximum deviation (A) from the reference torque signal (T_{ref}).

2. The method as claimed in claim 1, **characterized in that** a momentary angular velocity (ω) of the steering actuator (2) is taken into account in the determining of the reference torque signal (T_{ref}) by the reference controller (7).

3. The method as claimed in claim 2, **characterized in that** the reference torque signal (T_{ref}) contains one component proportional to the difference in the desired steering angle (β) and the actual steering angle (α) and one component dependent on the angular velocity (ω) of the steering actuator (2).

4. The method as claimed in one of claims 1 to 3, **characterized in that** the reference controller (7) is adapted in an optimized manner to reduce a control deviation.

5. The method as claimed in one of claims 1 to 4, **characterized in that** the maximum deviation (A) is selected depending on a driving speed (v) of the vehicle.

6. The method as claimed in one of claims 1 to 5, **characterized in that** the position controller (5) has a higher bandwidth than the reference controller (7).

7. The method as claimed in one of claims 1 to 6, **characterized in that** the signal limiting device (6) determines a deviation of the torque request signal (T_{req}) from the reference torque signal (T_{ref}), limits the deviation to the selectable maximum deviation (A) and outputs the sum of the limited deviation and the reference torque signal (T_{ref}) as a limited torque request signal (PT_{req}).

8. The method as claimed in one of claims 1 to 6, **characterized in that** the signal limiting device (6) determines an upper (8) and a lower range limit (9) of the permissible torque range (R) by adding the maximum deviation (A) to or subtracting the maximum deviation (A) from the reference torque signal (T_{ref}) and limits the torque request signal (T_{req}) if the upper (8) or lower range limit (9) is exceeded, to the respective upper (8) or lower range limit (9).

9. A steer-by-wire steering system (1) for a motor vehicle, comprising:
- an electronically controllable steering actuator (2) which acts on steered wheels and via which an actual steering angle (α) of the steered wheels can be detected,
- a feedback actuator (3) with which a desired steering angle (β) which can be set via a steering wheel is detectable, and
- an activation unit (4) for activating the steering actuator (2) in accordance with the desired steering angle (β) and the actual steering angle (α) by means of a limited torque request signal (PT_{req}),
wherein the activation unit (4) contains a position controller (5) and a signal limiting device (6), **characterized in that** the signal limiting device (6) contains a reference controller (7) and is designed to carry out the method as claimed in one of claims 1 to 8.

## Revendications

1. Procédé permettant de commander un système de direction à commande par câble (1) pour un véhicule automobile, comprenant un régulateur de direction (2) à régulation électronique, agissant sur des roues directrices et qui détecte un angle de braquage réel (a) des roues directrices, un actionneur à rétroaction (3) qui détecte un angle de braquage de consigne (β) réglé par un volant, et une unité de pilotage (4) qui pilote le régulateur de direction (2) en fonction de l'angle de braquage de consigne (β) et de l'angle de braquage réel (a) à l'aide d'un signal de demande de couple (PT_{req}) limité,
le procédé comprenant les étapes suivantes consistant à :
- déterminer un signal de demande de couple (T_{req}) par un régulateur de position (5) de l'unité de pilotage (4) sur la base au moins de l'angle de braquage de consigne (β) et de l'angle de braquage réel (a),
- limiter le signal de demande de couple (T_{req}) dans un dispositif de limitation de signal (6) de l'unité de pilotage (4) de telle sorte que le couple demandé par le signal de demande de couple (PT_{req}) limité est limité à une plage de couple admissible (R),
- transmettre le signal de demande de couple (PT_{req}) limité au régulateur de direction (2),
**caractérisé en ce que** le dispositif de limitation de signal (6) détermine au moyen d'un régulateur de référence (7) sur la base au moins de l'angle de braquage de consigne (β) et de l'angle de braquage réel (a) un signal de couple de référence (T_{ref}) et définit la plage de couple admissible (R) au moyen d'un écart maximal sélectionnable (A) par rapport au signal de couple de référence (T_{ref}).

2. Procédé selon la revendication 1, **caractérisé en ce qu'**une vitesse angulaire instantanée (ω) du régulateur de direction (2) est prise en compte lors de la détermination du signal de couple de référence (T_{ref}) par le régulateur de référence (7).

3. Procédé selon la revendication 2, **caractérisé en ce que** le signal de couple de référence (T_{ref}) contient une part proportionnelle à la différence entre l'angle de braquage de consigne (β) et l'angle de braquage réel (a) et une part dépendant de la vitesse angulaire (ω) du régulateur de direction (2).

4. Procédé selon l'une quelconque des revendications 1 à 3, **caractérisé en ce que** le régulateur de référence (7) est adapté de manière optimisée pour diminuer un écart de régulation.

5. Procédé selon l'une quelconque des revendications 1 à 4, **caractérisé en ce que** l'écart maximal (A) est choisi en fonction d'une vitesse de déplacement (v) du véhicule.

6. Procédé selon l'une quelconque des revendications 1 à 5, **caractérisé en ce que** le régulateur de position (5) présente une plus grande bande passante que le régulateur de référence (7).

7. Procédé selon l'une quelconque des revendications 1 à 6, **caractérisé en ce que** le dispositif de limitation de signal (6) détermine un écart du signal de demande de couple (T_{req}) par rapport au signal de couple de référence (T_{ref}), limite l'écart à l'écart maximal sélectionnable (A) et fournit comme signal de demande de couple (PT_{req}) limité la somme de l'écart limité et du signal de couple de référence (T_{ref}).

8. Procédé selon l'une quelconque des revendications 1 à 6, **caractérisé en ce que** le dispositif de limitation de signal (6) détermine une limite de plage supérieure (8) et inférieure (9) de la plage de couple admissible (R) en additionnant l'écart maximal (A) au, ou en soustrayant l'écart maximal (A) du signal de couple de référence (T_{ref}), et limite le signal de demande de couple (T_{req}) en cas de dépassement de la limite de plage supérieure (8) ou inférieure (9) à la limite de plage supérieure (8) ou inférieure (9) respective.

9. Système de direction à commande par câble (1) pour un véhicule automobile, comprenant :
- un régulateur de direction (2) à régulation électronique, agissant sur des roues directrices et qui permet de détecter un angle de braquage réel (a) des roues directrices,
- un actionneur à rétroaction (3) qui permet de détecter un angle de braquage de consigne (β) réglable par un volant, et
- une unité de pilotage (4) pour piloter le régulateur de direction (2) en fonction de l'angle de braquage de consigne (β) et de l'angle de braquage réel (α) au moyen d'un signal de demande de couple (PT_{req}) limité,
l'unité de pilotage (4) comportant un régulateur de position (5) et un dispositif de limitation de signal (6),
**caractérisé en ce que** le dispositif de limitation de signal (6) comporte un régulateur de référence (7) et est réalisé pour exécuter le procédé selon l'une quelconque des revendications 1 à 8.
